(19) Europäisches Patentamt
European Patent Office
Office européen des brevets

(11) **EP 1 672 231 B1**

(12) **FASCICULE DE BREVET EUROPEEN**

(45) Date de publication et mention de la délivrance du brevet:
**12.09.2007 Bulletin 2007/37**

(51) Int Cl.:
*F16C 23/10* <sup>(2006.01)</sup>     *F16C 11/06* <sup>(2006.01)</sup>

(21) Numéro de dépôt: **05292608.6**

(22) Date de dépôt: **08.12.2005**

(54) **Dispositif de liaison, de longueur ajustable, entre deux pièces.**

Längeneinstellbare Verbindungsvorrichtung zwischen zwei Bauteilen

Adjustable length connecting device between two elements

(84) Etats contractants désignés:
**DE ES FR GB IT**

(30) Priorité: **16.12.2004 FR 0413383**

(43) Date de publication de la demande:
**21.06.2006 Bulletin 2006/25**

(73) Titulaire: **SNECMA**
**75015 Paris (FR)**

(72) Inventeurs:
• **Etoile, Gérard**
  **77140 Nemours (FR)**

• **Bouru, Michel André**
  **77950 Montereau sur le Jard (FR)**

(74) Mandataire: **Barbin le Bourhis, Joël et al**
**Cabinet Beau de Loménie,**
**158, rue de l'Université**
**75340 Paris (FR)**

(56) Documents cités:
**DE-A1- 3 913 195       US-A- 5 431 540**

## Description

L'invention se rapporte à un dispositif de liaison entre deux pièces, typiquement entre un organe de commande et une pièce commandée. Elle concerne plus particulièrement des moyens de réglages précis de la longueur d'une liaison rigide articulée, formant biellette, installée entre ces deux pièces.

Un tel dispositif de liaison, selon le préambule de la revendication 1, est connu du document DE 3913195 A.

Dans de nombreux systèmes mécaniques, on rencontre le problème de l'ajustement de longueur d'une biellette ou analogue, (assurant une liaison rigide articulée entre deux pièces), ceci en raison des tolérances de montage et de fabrication des pièces.

Un tel dispositif de liaison, selon le préambule de la revendication 1, est connu du document DE 3913195 A.

Habituellement, ce réglage est réalisé en intégrant une sorte de ridoir à la biellette. Cette dernière est donc complexe et composée d'un certain nombre d'éléments. L'invention propose une solution présentant plusieurs avantages :

- réalisation d'une biellette mono-bloc, sans ridoir,
- grande précision de réglage,
- bonne tenue de la liaison, peu sensible aux efforts à transmettre.

L'idée de base de l'invention consiste à agencer une articulation à excentrique réglable, à au moins l'une des extrémités de la biellette.

Plus précisément, l'invention concerne un dispositif de liaison entre deux pièces, du type comportant une biellette articulée entre lesdites pièces, caractérisé en ce qu'au moins l'une des extrémités de ladite biellette comporte une tête de biellette articulée en chape à la pièce correspondante et en ce qu'un tourillon d'articulation, monté entre ladite chape et ladite biellette, est muni d'une partie excentrée à positionnement angulaire réglable stabilisé par la coopération de deux rondelles crantées radialement, respectivement solidaires de ladite chape et dudit tourillon.

Ladite partie excentrée peut faire partie du tourillon lui-même ou être constituée au moins en partie par une douille à excentrique portée par le tourillon.

Avantageusement, le tourillon porte une rotule sur laquelle pivote la tête de biellette précitée.

Selon un mode de réalisation possible, une première rondelle crantée comporte un ergot latéral s'étendant parallèlement à la direction axiale du tourillon tandis que la chape comporte extérieurement au moins une encoche de positionnement susceptible d'accueillir l'ergot latéral. Avantageusement, ladite chape comportera plusieurs encoches de positionnement décalées angulairement d'un angle prédéterminé, pour augmenter le nombre de positions de réglages possibles. Par exemple, lesdites encoches pourront être décalées entre elles d'un nombre entier de crans définis sur ladite rondelle crantée augmentée d'une fraction de la valeur angulaire d'un cran. Si la chape comporte n encoches, la fraction sera avantageusement égale à

$$\frac{1}{n}.$$

Dans certains modes de réalisation, ladite partie excentrée est localisée entre les deux flasques de la chape et porte la rotule. Au contraire, selon d'autres modes de réalisation, ladite partie excentrée comporte deux tronçons respectivement logés dans des alésages pratiqués dans les flasques de ladite chape. Les deux tronçons pourront être calés circonférentiellement l'un par rapport à l'autre, par tout moyen convenable simple, pour présenter la même excentration par rapport à la chape.

L'invention s'applique notamment à toute sorte de transmission mécanique. Notamment, dans le domaine des turbomachines et plus particulièrement celui des compresseurs de moteur d'avion, il est classique de commander l'orientation des aubes fixes d'au moins un étage dudit compresseur au moyen d'une couronne d'actionnement entourant le carter, cette couronne étant mécaniquement couplée à une pluralité de pivots d'aubes faisant saillie du carter. La couronne est elle-même actionnée par un moyen moteur, par exemple un vérin, via un mécanisme dit « renvoi d'angle ».

L'invention peut avantageusement s'appliquer à une biellette de transmission entre le moyen moteur (plus précisément le renvoi d'angle) et la couronne d'actionnement.

L'invention sera mieux comprise et d'autres avantages de celle-ci apparaîtront mieux à la lumière de la description qui va suivre de plusieurs modes de réalisation de liaisons mécaniques mettant en oeuvre son principe, donnée uniquement à titre d'exemple et faite en référence aux dessins annexés dans lesquels :

- la figure 1 est une vue de détail en perspective montrant l'agencement général d'un dispositif de liaison muni d'un système de réglage conforme à l'invention, installé entre une biellette mono-bloc et une chape prévue sur la couronne d'actionnement d'un système de commande de positionnement d'aubes fixes à calage variable, dans un compresseur ;
- la figure 2 est une vue de détail de la figure 1, en perspective éclatée et en coupe partielle à plus grande échelle ;
- la figure 3 est une vue de détail analogue à celle de la figure 2, illustrant une variante ;
- la figure 4 est une vue analogue à celle de la figure 2, illustrant une autre variante ;
- la figure 5 est une vue en coupe suivant un plan passant par l'axe du tourillon, illustrant une autre variante ;

- la figure 5A est une vue de détail d'une pièce du mécanisme de la figure 5 ;
- la figure 6 est une vue en coupe suivant un plan passant par l'axe du tourillon, illustrant une autre variante ; et
- la figure 6A est une vue de détail d'une pièce du mécanisme de la figure 6.

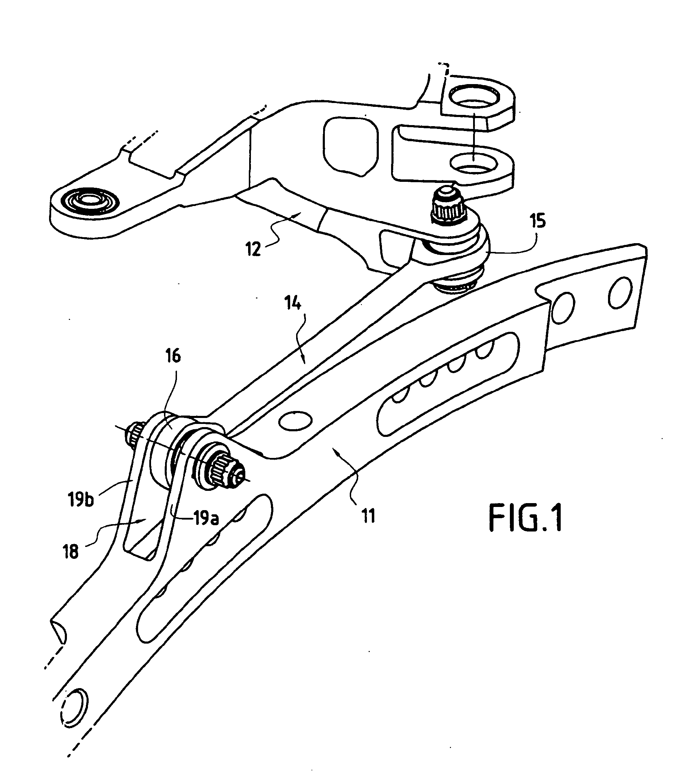

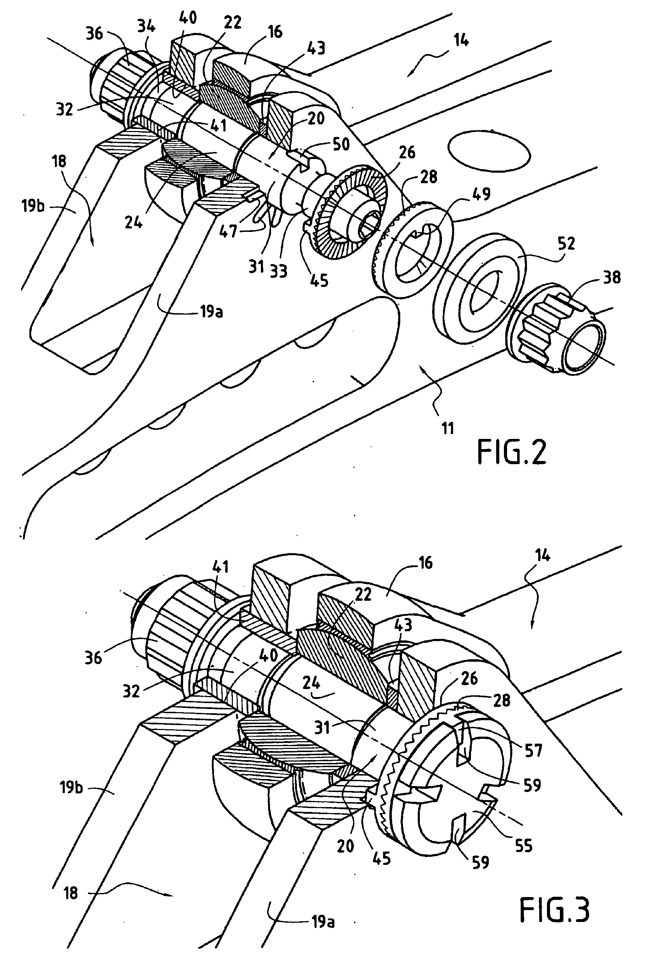

La figure 1 illustre, comme mentionné ci-dessus, une couronne d'actionnement 11 agencée à l'extérieur d'un carter de turbomachine (non représenté) pour la commande d'orientation d'une pluralité d'aubes fixes. On sait que la couronne est reliée à chaque pivot d'aube faisant saillie du carter par une biellette spécifique (non représentée). Le mouvement de la couronne est quant à lui commandé par un vérin actionnant une pièce pivotante 12 dite "renvoi d'angle". Cette pièce pivotante est mécaniquement reliée à la couronne d'actionnement par un dispositif de liaison conforme à l'invention. Ce dispositif de liaison comporte une biellette mono-bloc 14. Une tête de biellette 15 est articulée à la pièce dite renvoi d'angle. L'autre tête de biellette 16 est articulée en chape à la couronne 11. Le détail de cette articulation qui intègre les éléments essentiels de l'invention est visible sur la figure 2. Ladite chape comporte deux flasques 19a, 19b parallèles définis à l'extérieur de la couronne d'actionnement 11. Un tourillon d'articulation 20 est monté entre la chape 18 et la biellette 14. Plus précisément ici, ledit tourillon porte une rotule 22 sur laquelle pivote la tête de biellette. Le tourillon est muni d'une partie excentrée 24 à positionnement angulaire réglable, stabilisé par la coopération de deux rondelles crantées radialement 26, 28, respectivement solidaires de ladite chape 18 d'une part et dudit tourillon 20 d'autre part. Dans le mode de réalisation de la figure 2, la partie excentrée 24 est formée sur le tourillon lui-même et c'est cette partie excentrée située entre les deux flasques 19a, 19b de la chape qui porte la rotule 22. Les deux autres tronçons 31, 32 du tourillon, de part et d'autre de la partie excentrée centrale, sont coaxiaux. Ils se prolongent à l'extérieur de la chape, par des tronçons filetés 33, 34. Le tronçon fileté 34 reçoit un écrou 36. L'autre tronçon fileté 33 reçoit aussi un autre écrou 38 après interposition des rondelles crantées 26,28. Le flasque 19b de la chape comporte un trou de passage 40 du tourillon de plus grand diamètre que celui du tourillon lui-même, pour le montage des pièces en chape. Une bague de compensation cylindrique 41 est montée entre ce flasque 19b et le tronçon 32 qui le traverse. De plus, la bague de compensation 41 est montée en appui entre l'écrou et la rotule. Comme on le voit sur la figure 2, la longueur de la bague de compensation est telle que l'effort de serrage se trouve reporté exclusivement sur le flasque opposé 19a de la chape. Une rondelle de positionnement 43 est néanmoins interposée entre ce flasque et la rotule 22 pour un bon centrage de celle-ci entre les deux flasques de la chape. Ce montage évite les contraintes tendant à rapprocher les flasques l'un vers l'autre.

Chaque rondelle crantée comporte une pluralité de dents à profil en V, s'étendant radialement et s'imbriquant entre les dents de l'autre rondelle crantée.

Concernant le montage de la figure 2, on voit qu'une première rondelle crantée 26 comporte un ergot latéral 45 s'étendant parallèlement à la direction axiale du tourillon. Par ailleurs, le flasque 19a de la chape comporte extérieurement au moins une encoche de positionnement 47 susceptible d'accueillir l'ergot latéral 45. Dans l'exemple, le flasque de la chape comporte trois encoches de positionnement 47 décalées angulairement d'un angle prédéterminé, comme indiqué ci-dessus, pour augmenter le nombre de positions de réglage possibles. Plus précisément ici, si on considère le pas angulaire défini par le crantage des rondelles 26 et 28, les trois encoches de positionnement peuvent être décalées angulairement d'un nombre entier quelconque de pas angulaire, augmenté d'un tiers de ce pas angulaire. On dispose ainsi d'un pas élémentaire de réglage plus fin que le pas angulaire défini par la géométrie des rondelles crantées, à savoir ici plus précisément un tiers de ce pas angulaire.

Par ailleurs, une seconde rondelle crantée 28 comporte un ergot radial 49, dirigé vers l'intérieur, tandis que le tourillon 20 comporte une rainure 50 parallèle à son axe, dans sa partie faisant saillie à l'extérieur du flasque 19a. L'ergot radial 49 s'engage dans cette rainure. Ainsi, la rondelle crantée 26 est solidaire de la chape tandis que la rondelle crantée 28 est solidaire du tourillon. Une rondelle 52 creuse enveloppant partiellement l'empilage des deux rondelles crantées est interposée entre la rondelle crantée 28 et l'écrou 38.

Dans le mode de réalisation de la figure 3, les éléments de structure analogues à ceux de la figure 2 portent les mêmes références numériques et ne seront pas décrits à nouveau. Ce mode de réalisation est remarquable en ce que l'une des extrémités du tourillon 20 comporte une tête 55 (au lieu d'un tronçon fileté) contre laquelle prend appui ladite seconde rondelle crantée 28. Cette dernière comporte un ergot latéral 57 s'étendant parallèlement à la direction axiale du tourillon et la tête 55 comporte au moins une encoche de positionnement 59 susceptible d'accueillir ledit ergot latéral.

Pour augmenter le nombre de positions réglages on peut, comme dans le mode de réalisation précédent, prévoir plusieurs encoches sur le flasque 19a pour pouvoir immobiliser la rondelle crantée dans plusieurs positions possibles mais on peut aussi, comme représenté prévoir plusieurs encoches de positionnement 59 dans la tête elle-même, décalées angulairement d'un angle prédéterminé, les valeurs de décalage étant calculées de la même façon qu'indiqué précédemment. Dans le mode de réalisation décrit, on a prévu quatre encoches de positionnement sur la tête elle-même.

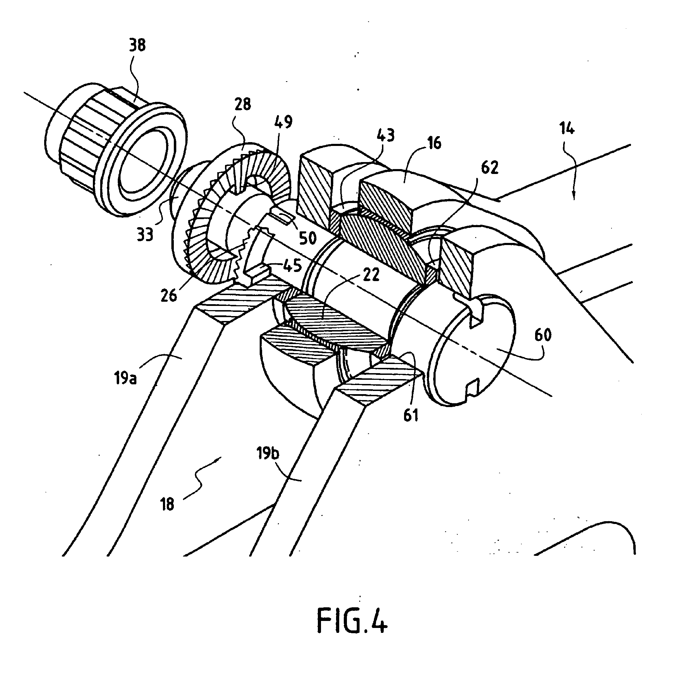

Dans le mode de réalisation de la figure 4, le montage des rondelles crantées est semblable à celui de la figure 2. En revanche, du côté de l'autre flasque 19b de la chape 18, le tourillon comporte une tête cylindrique 60 de plus grand diamètre, (ce qui permet le montage) et cette tête est ajustée dans un alésage 61 correspondant, du flasque 19b. Elle prend appui sur la rotule, par l'intermédiaire d'une rondelle de centrage 62. Ainsi les forces de serrage sont reportées exclusivement sur l'autre flasque 19a, du côté des rondelles crantées.

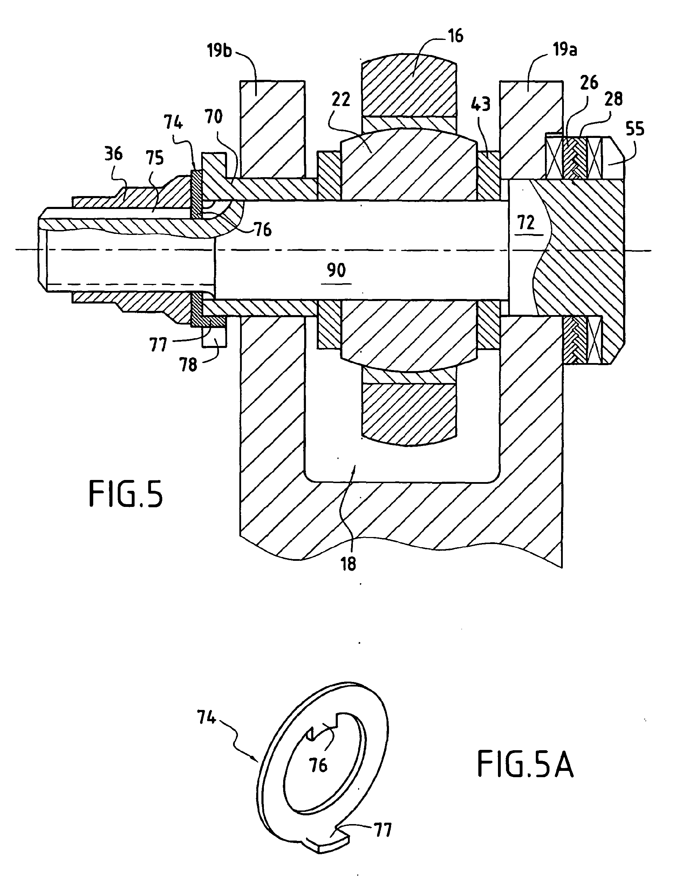

Dans les modes de réalisation suivants, la partie excentrée n'est plus au centre de la chape 18 mais se combine avec les deux tronçons 31, 32 engagés dans les flasques 19a, 19b de celle-ci. Autrement dit, la partie excentrée comporte deux tronçons logés dans des alésages pratiqués dans les flasques de la chape. Sur le mode de réalisation de la figure 5, l'un des tronçons est réalisé par une douille 70 à excentrique montée sur le tourillon 20 tandis que l'autre tronçon est réalisé par une partie excentrée 72 du tourillon lui-même, adjacent à une tête extérieure 55 de celui-ci. Les rondelles crantées 26, 28 sont agencées entre cette tête et le flasque 19a, comme dans le mode de réalisation de la figure 3. Les deux tronçons sont calés circonférentiellement l'un par rapport à l'autre pour présenter la même excentration par rapport à la chape. Ceci est réalisé grâce à une rondelle de synchronisation 74, interposée entre l'écrou 36 et l'extrémité de la douille à excentrique 70. Cette rondelle, visible sur la figure 5A comporte une patte radiale 76 dirigée vers l'intérieur et engagée dans une rainure longitudinale 75 pratiquée dans le tronçon fileté du tourillon. Elle comporte également une patte d'orientation longitudinale 77 engagée dans une encoche 78 de la douille 70. Comme précédemment, la douille est d'une longueur suffisante pour reporter l'effort de serrage de part et d'autre du flasque 19a.

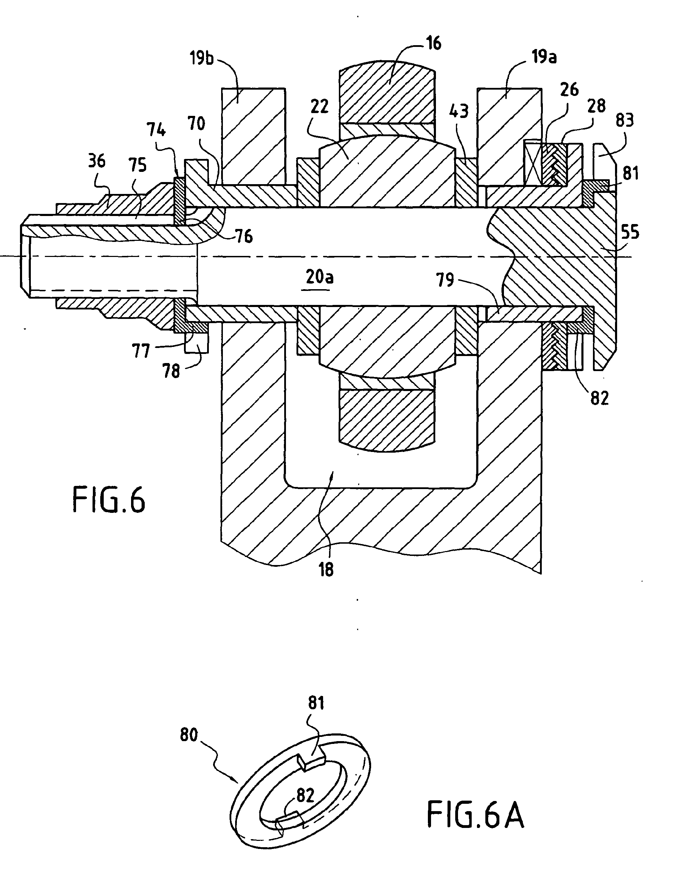

Dans le mode de réalisation de la figure 6, on prévoit deux douilles à excentrique opposées 70, 79, montées sur un tourillon 20a cylindrique muni d'une tête 55 à l'une de ses extrémités. Du côté de l'écrou 36, le montage est identique à celui de la figure 5 avec le même type de rondelle de synchronisation 74. Du côté de la tête 55, une autre rondelle de synchronisation 80 est intercalée entre la tête 55 et la douille à excentrique 79. Cette rondelle de synchronisation a la forme illustrée sur la figure 6A. Elle comporte deux pattes 81, 82 d'orientation axiale. L'une des pattes est engagée dans une encoche de la douille 80 tandis que l'autre patte, de sens opposé est engagée dans une encoche 83 de la tête 55 du tourillon cylindrique.

**Revendications**

1. Dispositif de liaison entre deux pièces comportant une biellette (14) articulée entre lesdites pièces, dont au moins l'une des extrémités de ladite biellette comporte une tête de biellette (16) articulée en chape à la pièce (11) correspondante, et comportant un tourillon d'articulation (20) monté entre ladite chape et ladite biellette et muni d'une partie excentrée (24) à positionnement angulaire réglable, **caractérisé en ce que** ce positionnement angulaire est stabilisé par la coopération de deux rondelles (26, 28) crantées radialement, respectivement solidaires de ladite chape et dudit tourillon.

2. Dispositif selon la revendication 1, **caractérisé en ce que** ledit tourillon porte une rotule (22) sur laquelle pivote la tête de biellette précitée.

3. Dispositif selon la revendication 1 ou 2, **caractérisé en ce qu'**une première rondelle crantée (26) comporte un ergot latéral (45) s'étendant parallèlement à la direction axiale dudit tourillon et en ce que ladite chape comporte extérieurement au moins une encoche de positionnement (47) susceptible d'accueillir ledit ergot latéral.

4. Dispositif selon la revendication 3, **caractérisé en ce que** ladite chape comporte plusieurs encoches de positionnement (47) décalées angulairement d'un angle prédéterminé, pour augmenter le nombre de positions de réglage possibles.

5. Dispositif selon l'une des revendications précédentes, **caractérisé en ce qu'**une seconde rondelle crantée (28) comporte un ergot radial (49) et en ce que ledit tourillon comporte une rainure (50) parallèle à son axe, dans laquelle s'engage ledit ergot radial.

6. Dispositif selon l'une des revendications 1 à 4, **caractérisé en ce que** l'une des extrémités dudit tourillon comporte une tête (55) contre laquelle prend appui une seconde rondelle crantée (28), **en ce que** cette dernière comporte un ergot latéral (57) s'étendant parallèlement à la direction axiale dudit tourillon et **en ce que** ladite tête comporte au moins une encoche de positionnement (59) susceptible d'accueillir cet ergot latéral (57).

7. Dispositif selon la revendication 6, **caractérisé en ce que** ladite tête comporte plusieurs encoches de positionnement (59) décalées angulairement d'un angle prédéterminé, pour augmenter le nombre de positions de réglages possibles.

8. Dispositif selon l'une des revendications 2 à 7, **caractérisé en ce que** ladite partie excentrée (24) se situe sur le tourillon lui-même et **en ce qu'**elle porte ladite rotule (22).

9. Dispositif selon la revendication 8, **caractérisé en ce que** l'un des flasques de ladite chape comporte un trou de passage (40) dudit tourillon de plus grand diamètre que celui dudit tourillon, **en ce qu'**une bague de compensation (41), cylindrique, est montée entre ce flasque (19a) et ledit tourillon (20) et **en ce que** ladite bague de compensation (41) est montée entre un écrou (36) vissé à une extrémité filetée dudit tourillon et ladite rotule (22), la longueur de ladite bague étant telle que l'effort de serrage soit reporté exclusivement sur l'autre flasque de ladite chape.

10. Dispositif selon la revendication 8, **caractérisé en ce que** ledit tourillon comporte une tête cylindrique (60) de plus grand diamètre, ajustée dans un alésage (61) correspondant de l'un des flasques et prenant appui sur ladite rotule de façon que l'effort de serrage soit reporté exclusivement sur l'autre flasque.

11. Dispositif selon l'une des revendications 2 à 7, **caractérisé en ce que** ladite partie excentrique comporte deux tronçons respectivement logés dans des alésages pratiqués dans les flasques (19a, 19b) de ladite chape.

12. Dispositif selon la revendication 11, **caractérisé en ce que** les deux tronçons sont calés circonférentiellement l'un par rapport à l'autre pour présenter la même excentration.

13. Dispositif selon la revendication 11 ou 12, **caractérisé en ce que** l'un des tronçons est réalisé par une douille à excentrique (70) montée sur le tourillon et l'autre par une partie excentrée (72) du tourillon lui-même.

14. Dispositif selon la revendication 11 ou 12, **caractérisé en ce que** chaque tronçon est réalisé par une douille à excentrique (70, 79) montée sur ledit tourillon.

**Claims**

1. A device for making a connection between two parts comprising a hinged link (14) extending between said parts with at least one of the ends of said link including a link head (16) hinged in a clevis to the corresponding part (11), and said device comprising a hinge pin (20) mounted between said clevis and said link and provided with an eccentric portion (24) of adjustable angular position, the device being **characterised in that** said angular position is stabilised by co-operation between two radially-corrugated washers (26, 28) secured respectively to said clevis and to said pin.

2. A device according to claim 1, **characterised in that** said pin carries a ball (22) on which the above-mentioned link head pivots.

3. A device according to claim 1 or claim 2, **characterised in that** a first corrugated washer (26) includes a lateral lug (45) extending parallel to the axial direction of said pin, and **in that** said clevis includes externally at least one positioning slot (47) suitable for receiving said lateral lug.

4. A device according to claim 3, **characterised in that** said clevis includes a plurality of positioning slots (47) that are angularly offset by a predetermined angle so as to increase the number of possible adjustment positions.

5. A device according to one of the preceding claims, **characterised in that** a second corrugated washer (28) includes a radial lug (49), and **in that** said pin includes a groove (50) parallel to its axis, in which said radial lug is engaged.

6. A device according to one of claims 1 to 4, **characterised in that** one of the ends of said pin includes a head (55) against which a second corrugated washer (28) bears, **in that** said second corrugated washer includes a lateral lug (57) extending parallel to the axial direction of said pin, and **in that** said head includes at least one positioning slot (59) suitable for receiving said lateral lug (57).

7. A device according to claim 6, **characterised in that** said head has a plurality of positioning slots (59) angularly offset by a predetermined angle in order to increase the number of possible adjustment positions.

8. A device according to one of claims 2 to 7, **characterised in that** said eccentric portion (24) is situated on the pin itself, and **in that** it carries said ball (22).

9. A device according to claim 8, **characterised in that** one of the plates of said clevis includes a hole (40) for passing said pin that is larger in diameter than said pin, **in that** a cylindrical compensation ring (41) is mounted between said plate (19a) and said pin (20), and **in that** said compensation ring (41) is mounted between said ball (22) and a nut (36) screwed onto a threaded end of said pin, the length of said ring being such that the clamping force is taken up exclusively on the other plate of said clevis.

10. A device according to claim 8, **characterised in that** said pin has a cylindrical head (60) of greater diameter that is fitted in a corresponding bore (61) of one of the plates and that bears against said ball in such a manner that the clamping force is taken up exclusively by the other plate.

11. A device according to one of claims 2 to 7, **characterised in that** said eccentric portion comprises two segments received respectively in bores formed in the plates (19a, 19b) of said clevis.

**12.** A device according to claim 11, **characterised in that** the two segments are held circumferentially in position relative to each other so as to present the same eccentricity.

**13.** A device according to claim 11 or claim 12, **characterised in that** one of said segments is constituted by an eccentric bushing (70) mounted on the pin, and the other by an eccentric portion (72) of the pin itself.

**14.** A device according to claim 11 or claim 12, **characterised in that** each segment is constituted by an eccentric bushing (70, 79) mounted on said pin.

**Patentansprüche**

**1.** Verbindungsvorrichtung zwischen zwei Bauteilen, umfassend einen Stangenhebel (14), der zwischen den Bauteilen gelenkig eingefügt ist, wobei mindestens eines der Enden des Stangenhebels einen Stangenhebelkopf (16) umfaßt, der mittels eines Gabelgelenks beziehungsweise Gabelkopfes an dem entsprechenden Bauteil (11) eingefügt ist, und umfassend einen Gelenklagerzapfen (20), montiert zwischen dem Gabelkopf und dem Stangenhebel und ausgestattet mit einem Exzenterbauteil (24) zur verstellbaren Winkelpositionierung, **dadurch gekennzeichnet, daß** diese Winkelpositionierung stabilisiert wird durch das Zusammenwirken zweier radial gezahnten Scheiben (26, 28), die jeweils mit dem Gabelkopf und dem Lagerzapfen fest verbunden sind.

**2.** Vorrichtung nach Anspruch 1, **dadurch gekennzeichnet, daß** der Lagerzapfen ein Kugelgelenk (22) trägt, auf welchem der oben genannte Stangenhebelkopf schwenkbar gelagert ist.

**3.** Vorrichtung nach Anspruch 1 oder 2, **dadurch gekennzeichnet, daß** eine erste gezahnte Scheibe (26) einen seitlichen Sporn (45) umfaßt, der sich parallel zur axialen Richtung des Lagerzapfens erstreckt, und daß der Gabelkopf außen mindestens eine Positionierungskerbe (47) umfaßt, die den seitlichen Sporn aufnehmen kann.

**4.** Vorrichtung nach Anspruch 3, **dadurch gekennzeichnet, daß** der Gabelkopf mehrere Positionierungskerben (47) umfaßt, die winkelig um einen vorbestimmten Winkel versetzt angeordnet sind, um die Zahl von möglichen Einstellungspositionen zu erhöhen.

**5.** Vorrichtung nach einem der vorangehenden Ansprüche, **dadurch gekennzeichnet, daß** eine zweite gezahnte Scheibe (28) einen radialen Sporn (49) umfaßt, und daß der Lagerzapfen eine zu seiner Achse parallele Rille (50) umfaßt, in welcher der radiale Sporn einrastet.

**6.** Vorrichtung nach einem der Ansprüche 1 bis 4, **dadurch gekennzeichnet, daß** eine der Extremitäten des Lagerzapfens einen Kopf (55) umfaßt, gegen den eine zweite gezahnte Scheibe (28) anliegt, daß letztere einen seitlichen Sporn (57) umfaßt, der sich parallel zur axialen Richtung des Lagerzapfens erstreckt, und daß der Kopf mindestens eine Positionierungskerbe (59) umfaßt, die diesen seitlichen Sporn (57) aufnehmen kann.

**7.** Vorrichtung nach Anspruch 6, **dadurch gekennzeichnet, daß** der Kopf mehrere Positionierungskerben (59) umfaßt, die winkelig um einen vorbestimmten Winkel versetzt angeordnet sind, um die Zahl von möglichen Einstellungspositionen zu erhöhen.

**8.** Vorrichtung nach einem der Ansprüche 2 bis 7, **dadurch gekennzeichnet, daß** das Exzenterbauteil (24) sich auf dem Lagerzapfen selbst befindet und daß es die Kugelgelenkpfanne (22) trägt

**9.** Vorrichtung nach Anspruch 8, **dadurch gekennzeichnet, daß** einer der Flansche des Gabelkopfs ein Durchgangsloch (40) für den Lagerzapfen mit einem größeren Durchmesser als demjenigen des Lagerzapfens umfaßt, daß eine zylindrische Ausgleichsscheibe (41) zwischen diesem Flansch (19a) und dem Lagerzapfen (20) montiert ist, und daß die Ausgleichsscheibe (41) montiert ist zwischen einer Mutter (36), verschraubt an einer Gewinde-Extremität des Lagerzapfens, und der Kugelgelenkpfanne (22), wobei die Länge der Scheibe derart ist, daß die Spannkraft ausschließlich auf den anderen Flansch des Gabelkopfs übertragen wird.

**10.** Vorrichtung nach Anspruch 8, **dadurch gekennzeichnet, daß** der Lagerzapfen einen zylindrischen Kopf (60) mit größerem Durchmesser umfaßt, der in einer entsprechenden Bohrung (61) von einem der Flansche justiert ist und auf der Kugelgelenkpfanne aufliegt, so daß die Spannkraft ausschließlich auf den anderen Flansch übertragen wird.

**11.** Vorrichtung nach einem der Ansprüche 2 bis 7, **dadurch gekennzeichnet, daß** das Exzenterbauteil zwei Teilstücke umfaßt, jeweils untergebracht in passenden Bohrungen in den Flanschen (19a, 19b) des Gabelkopfs.

**12.** Vorrichtung nach Anspruch 11, **dadurch gekennzeichnet, daß** die zwei Teilstücke in Umfangsrichtung gegeneinander verkantet beziehungsweise verkeilt sind, um die gleiche Exzentrierung aufzuweisen.

**13.** Vorrichtung nach Anspruch 11 oder 12, **dadurch gekennzeichnet, daß** eines der Teilstücke durch eine auf dem Lagerzapfen montierte Exzenterhülse (70), und das andere durch ein Exzenterbauteil (72) des Lagerzapfens selbst ausgeführt ist.

**14.** Vorrichtung nach Anspruch 11 oder 12, **dadurch gekennzeichnet, daß** jedes Teilstück durch eine auf dem Lagerzapfen montierte Exzenterhülse (70, 79) ausgeführt ist.

FIG.1

FIG.2

FIG.3

FIG.4

FIG.5

FIG.5A

FIG.6

FIG.6A

**EP 1 672 231 B1**

## RÉFÉRENCES CITÉES DANS LA DESCRIPTION

**Documents brevets cités dans la description**

- DE 3913195 A